# FASCICULE DE BREVET EUROPEEN

(11) **EP 0 913 616 B1**
(45) Date de publication et mention de la délivrance du brevet: **07.05.2003**
(21) Numéro de dépôt: 98470026.0
(22) Date de dépôt: 22.10.1998
(51) Int. Cl.: F16L 27/06

(54) **Joint à rotule pour l'assemblage étanche de deux éléments de canalisation**
Kugelgelenk zum dichten Verbinden von zwei Rohrelementen
Ball coupling for sealingly connecting two pipe sections

(30) Priorité: 30.10.1997 FR 9713813
(43) Date de publication de la demande: 06.05.1999
(73) Titulaire: SAINT-GOBAIN PAM, 54000 Nancy (FR)
(72) Inventeur: Hauer, Jean-Claude, 54420 Saulxures les Nancy (FR); Berthon, Francis, 54340 Pompey (FR)
(74) Mandataire: Puit, Thierry

(56) Documents cités:
- EP-A- 0 226 573
- BE-A- 393 763
- FR-A- 2 596 492

## Description

La présente invention concerne un joint à rotule pour l'assemblage étanche de deux éléments de canalisation, du type où le bout mâle d'un premier élément de canalisation est muni d'un bourrelet sphérique destiné à venir s'engager 5 à pivotement dans un logement à profil sphérique adapté dont est pourvue l'emboîture d'un second élément de canalisation, avec interposition d'une garniture d'étanchéité annulaire en élastomère qui est logée dans une gorge annulaire ménagée dans la paroi interne de l'emboîture. Un tel joint est connu du document FR-A-2 596 492.

De même, un tel joint à rotule est utilisé pour l'assemblage d'éléments de canalisation, notamment en fonte ductile, entrant dans la construction de canalisations d'assainissement.

Il trouve son intérêt principalement lorsqu'il faut relier entre eux deux éléments de tuyauterie présentant une déviation angulaire, notamment pour la jonction de deux tuyaux désaxés ou encore par exemple pour ajuster angulairement le raccordement de la tubulure de sortie d'une boite de branchement à un tronçon de canalisation reliant ladite tubulure de sortie à un collecteur principal disposé plus profondément dans le sol. La jonction à rotule permet alors de rattraper les déviations angulaires entre les éléments de canalisation à relier.

De telles jonctions doivent non seulement être étanches mais de plus résister à la traction afin de ne pas conduire à un déboîtement du joint. Ce risque est particulièrement important lorsque les canalisations sont soumises à la pression interne du fluide véhiculé, ou encore lorsqu'elles sont enfouies dans un sol meuble ou dans un sol supportant un trafic routier important.

Les solutions connues proposées pour remédier à ce phénomène de déboîtement de la rotule sphérique sont des solutions complexes et coûteuses car elles font appel à un moyen de blocage rapporté, de type manchon ou écrou, dont une extrémité est fixée à l'emboîture tandis qu'une autre extrémité vient en appui sur le bourrelet sphérique du bout mâle pour en interdire le désaccouplement.

L'invention a pour but de fournir une solution simple et économique à ce problème de déboîtement, en créant un joint à rotule étanche où la résistance à la traction du bout mâle est obtenue sans avoir recours à un moyen de blocage rapporté.

A cet effet, l'invention a pour objet un joint à rotule du type précité, où la gorge de logement de la garniture d'étanchéité est disposée et conformée de manière telle qu'elle constitue une chambre d'expansion pour l'élastomère de la garniture lors de l'enfoncement du bourrelet sphérique dans l'emboîture et assure, en position emboîtée, l'appui de la garniture sur la partie postérieure du bourrelet située au-delà du diamètre maximum dudit bourrelet pris dans une direction perpendiculaire à l'axe de l'emboîture, la garniture d'étanchéité étant alors soumise à une compression radiale résiduelle qui garantit l'étanchéité de l'assemblage et empêche simultanément les éléments de canalisation de se disjoindre.

Suivant les caractéristiques d'autres exemples de l'invention:
- la gorge de logement de la garniture d'étanchéité est ménagée dans un évasement annulaire situé à l'entrée de l'emboîture, dont le diamètre interne est supérieur au diamètre maximal du bourrelet sphérique, ledit évasement se raccordant au logement à profil sphérique de l'emboîture et étant défini par deux parois latérales inclinées qui convergent vers l'extérieur et qui sont reliées entre elles par un arrondi ;
- les deux parois latérales de l'évasement réalisent entre elles un angle compris entre 45° et 70° environ ;
- la garniture d'étanchéité est torique ;
- le joint à rotule comprend des moyens de butée destinés à s'opposer à tout assemblage en contre-pente des deux éléments de canalisation à joindre.

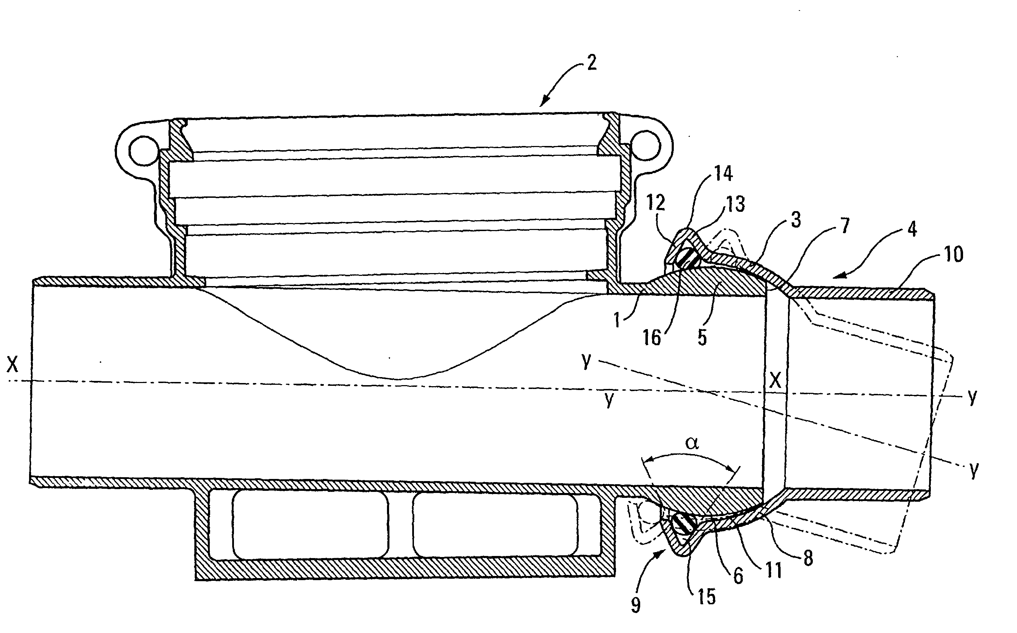

L'invention sera mieux comprise à la lecture de la description qui va suivre, donnée uniquement à titre d'exemple et faite en se référant au dessin annexé, sur lequel :
- la figure unique est une vue en coupe longitudinale d'un assemblage étanche de deux éléments de canalisation au moyen d'un joint à rotule suivant l'invention.

Sur cette figure, on a représenté un joint à rotule entre le bout mâle 1 d'axe X-X formant tubulure de sortie d'une boîte de branchement 2 et l'emboîture 3 d'axe Y-Y d'un tronçon de tuyau 4 d'épaisseur sensiblement uniforme. Ce tronçon 4 est raccordé directement, ou par l'intermédiaire d'autres sections de tuyaux (non représentées), à un collecteur principal (non représenté).

Dans l'exemple décrit, on a représenté en traits pleins le cas de figure où le bout mâle 1 et l'emboîture 3 sont coaxiaux, l'axe X-X du bout mâle 1 et l'axe Y-Y de l'emboîture 3 étant alors confondus.

Le bout mâle 1 présente un bourrelet sphérique 5 d'extrémité, en saillie radiale vers l'extérieur, qui présente ainsi une surface externe 6 en forme de portion sphérique, et se termine par une tranche d'extrémité radiale 7.

L'emboîture 3 comprend une partie sphérique 8 dont l'extrémité élargie se raccorde à un évasement annulaire 9 situé à l'entrée de l'emboîture, tandis que l'extrémité rétrécie de la partie sphérique 8, située en fond d'emboîture, se raccorde au fût cylindrique 10 du tronçon de tuyau 4. La surface interne 11 de la partie sphérique 8 délimite ainsi un logement à profil sphérique dont les dimensions permettent au bourrelet sphérique 5 de venir s'y engager à pivotement, ceci de manière à former une rotule orientable en tous sens.

A cet effet, le rayon de la surface interne 11 qui constitue la portée sphérique femelle est supérieur ou égal au rayon de la surface externe 6 du bourrelet 5 qui constitue la portée sphérique mâle.

L'évasement 9 comprend deux parois latérales 12 et 13 inclinées l'une vers l'autre et reliées entre elles par un sommet arrondi 14, les deux parois 12 et 13 réalisant entre elles un angle α compris entre 45° et 70° environ. La paroi latérale 13 la plus intérieure est reliée à la partie sphérique 8 par un léger arrondi, tandis que la paroi latérale 12 située à l'entrée de l'emboîture présente un diamètre interne minimum supérieur au diamètre de la portée sphérique 6 externe du bourrelet 5, ceci de manière à permettre l'introduction du bout mâle 1 dans l'emboîture 3.

Dans l'exemple décrit, l'évasement annulaire 9 a un profil méridien en forme de triangle isocèle à sommet arrondi.

L'évasement 9 délimite ainsi une gorge annulaire 15 servant de logement à une garniture d'étanchéité torique 16 réalisée en un matériau élastomère qui assure l'étanchéité entre l'emboîture 3 et le bout mâle 1 inséré.

Cette garniture d'étanchéité 16 est telle qu'à l'état libre, le diamètre interne du tore est d'une part inférieur au diamètre de la portée sphérique 6 externe du bourrelet 5, et d'autre part supérieur ou égal au diamètre externe de la tranche d'extrémité 7 dudit bourrelet 5, ceci de manière à pouvoir emmancher le bout mâle 1 dans l'emboîture 3.

Le montage du joint à rotule selon l'invention est réalisé par emmanchement à force du bout mâle 1 dans l'emboîture 3, et ce à l'aide de moyens mécaniques du type presse ou analogue.

Lors de cette opération, la garniture d'étanchéité 16 est tout d'abord comprimée de manière croissante au fur et à mesure de l'enfoncement du bout mâle, et ce jusqu'à ce que le diamètre maximum du bourrelet sphérique 5 5 soit atteint, ce diamètre maximum étant pris dans une direction perpendiculaire à l'axe de l'emboîture 3. Durant cette première phase, le tore 16 est comprimé entre les deux parois latérales 12 et 13 de l'évasement 9 et le bourrelet 5, la garniture 16 s'appuyant sur la partie antérieure du bourrelet 5, c'est-à-dire sur le segment de la portée sphérique mâle 6 situé entre la tranche d'extrémité 7 et ledit diamètre maximum du bourrelet 5.

La compression maximale est obtenue lorsque la garniture d'étanchéité 16 vient en contact avec le diamètre maximum du bourrelet 5, la valeur du diamètre maximum correspondant en fait au diamètre de la portée sphérique 6 du bourrelet.

Il est à noter que la compression de la garniture 16 entraîne simultanément l'expansion de l'élastomère dans la gorge annulaire 15 lui servant de logement. La gorge 15 constitue ainsi une chambre d'expansion dont le volume est suffisant pour permettre une telle expansion pendant le montage du joint.

Ensuite, la poursuite de l'enfoncement du bout mâle 1 amène la garniture d'étanchéité 16 à passer au-delà du diamètre maximum du bourrelet 5 et à prendre appui sur la partie postérieure dudit bourrelet, c'est-à-dire sur le segment de la portée sphérique mâle 6 situé au-delà du diamètre maximum et à l'opposé de la tranche d'extrémité 7 du bourrelet. Lors de cette secondé phase, la garniture 16 subit une décompression partielle et repousse automatiquement le bourrelet 5 jusqu'à l'amener en butée contre l'emboîture 3.

Cette position où la tranche d'extrémité 7 du bourrelet 5 est en butée contre la portée sphérique 11 femelle de l'emboîture 3 constitue la position finale emboîtée. Dans cette position emboîtée, la garniture d'étanchéité 16 reste comprimée entre les deux parois latérales 12 et 13 et la partie postérieure du bourrelet 5 sphérique 5, la compression résiduelle qu'elle subit étant suffisante pour garantir l'étanchéité de l'assemblage.

De plus, la pression de contact au niveau de chacune des deux parois latérales 12 et 13 engendre une réaction oblique dont la composante horizontale s'oppose au déboîtement.

Le joint à rotule selon l'invention permet par conséquent à la garniture d'étanchéité d'assurer simultanément l'étanchéité de la jonction ainsi que la retenue du bout mâle en position emboîtée.

On s'affranchit ainsi de façon simple et économique de l'utilisation d'un organe rapporté pour le blocage de la rotule en position emboîtée.

On notera en outre que le joint à rotule selon l'invention permet de réaliser l'assemblage d'éléments de canalisation présentant des déviations angulaires pouvant aller jusqu'à 20° environ. Sur la figure unique, on a ainsi également représenté en traits mixtes la position de montage du joint lorsque l'axe longitudinal X-X du bout mâle 1 et l'axe Y-Y du tronçon de tuyau 4 4 ne sont pas coaxiaux.

De plus, la butée du bout mâle 1 en fond d'emboîture se fait suivant une ligne circulaire, au niveau de la périphérie externe de la tranche d'extrémité 7 7 du bourrelet 5, ce qui permet la déviation angulaire en tous sens tout en interdisant l'excentration nuisible à l'étanchéité.

Enfin, lorsque le fluide transporté s'écoule par gravité, il peut être avantageux d'équiper le joint à rotule selon l'invention de moyens destinés à empêcher tout assemblage en contre-pente entre les deux éléments de canalisation à joindre, ceci afin de ne pas nuire à l'écoulement.

Un tel assemblage à contre-pente, où le bout mâle 1 et le tronçon de tuyau 4 forment entre eux un coude ouvert vers le haut, peut notamment résulter d'un mauvais montage du joint ou d'un tassement ultérieur du terrain dans lequel ces éléments de canalisation sont enfouis.

Pour supprimer ce risque on peut par exemple prévoir des moyens (non représentés), solidaires du bout mâle, qui servent de butée à l'emboîture pour s'opposer à tout assemblage en contre-pente. Ces moyens de butée, en saillie radiale externe sur la partie supérieure du bout mâle, sont disposés dans la zone reliant le fût du bout mâle 1 au bourrelet sphérique 5 sans pour autant gêner le montage du joint à rotule, et s'étendent le long d'un segment périphérique supérieur qui définit, de part et d'autre de la verticale, un angle pouvant atteindre 60° environ. Les moyens de butée peuvent ainsi se présenter sous la forme d'une nervure s'étendant sur la totalité de ce segment périphérique, ou bien être formés de plusieurs reliefs de butée régulièrement répartis le long de ce segment.

## Revendications

1. Joint à rotule pour l'assemblage étanche de deux éléments de canalisation (2, 4), du type où le bout mâle (1) d'un premier élément de canalisation (2) est muni d'un bourrelet sphérique (5) destiné à venir s'engager à pivotement dans un logement à profil sphérique (11) adapté dont est pourvue l'emboîture (3) d'axe Y-Y d'un second élément de canalisation (4), avec interposition d'une garniture d'étanchéité annulaire (16) en élastomère qui est logée dans une gorge annulaire (15) ménagée dans la paroi interne de l'emboîture (3), **caractérisé en ce que** la gorge (15) de logement de la garniture d'étanchéité (16) est disposée et conformée de manière telle qu'elle constitue une chambre d'expansion pour l'élastomère de la garniture (16) lors de l'enfoncement du bourrelet sphérique (5) dans l'emboîture (3) et assure, en position emboîtée, l'appui de la garniture (16) sur la partie postérieure du bourrelet (5) située au-delà du diamètre maximum dudit bourrelet (5) pris dans une direction perpendiculaire à l'axe Y-Y de l'emboîture (3), la garniture d'étanchéité (16) étant alors soumise à une compression radiale résiduelle qui garantit l'étanchéité de l'assemblage et empêche simultanément les éléments de canalisation (2, 4) de se disjoindre.

2. Joint à rotule suivant la revendication 1, **caractérisé en ce que** la gorge (15) de logement de la garniture d'étanchéité (16) est ménagée dans un évasement annulaire (9) situé à l'entrée de l'emboîture, dont le diamètre interne est supérieur au diamètre maximal du bourrelet sphérique (5), ledit évasement (9) se raccordant au logement à profil sphérique (11) ce l'emboîture (3) et étant défini par deux parois latérales (12, 13) inclinées qui convergent vers l'extérieur et qui sont reliées entre elles par un arrondi (14).

3. Joint à rotule suivant la revendication 2, **caractérisé en ce que** les deux parois latérales (12, 13) de l'évasement (9) réalisent entre elles un angle α compris entre 45° et 70° environ.

4. Joint à rotule suivant l'une quelconque des revendications 1 à 3, **caractérisé en ce que** la garniture d'étanchéité (16) est torique.

5. Joint à rotule suivant l'une quelconque des revendications 1 à 4, **caractérisé en ce qu'**il comprend des moyens de butée destinés à s'opposer à tout assemblage en contre-pente des deux éléments de canalisation à joindre.

## Patentansprüche

1. Kugelgelenk zur dichten Verbindung zweier Rohrelemente (2, 4), von der Art, wo das Ende (1) eines ersten Rohrelements (2) eine runde Wulst (5) aufweist, die sich schwenkbar in ein passendes Lager mit rundem Profil (11) versenkt, mit dem der Schaft (3) mit einer Achse Y-Y eines zweiten Rohrelements (4) versehen ist, unter Zwischenschaltung einer Ringdichtung (16) aus einem Elastomer, die in einer in der Innenwand des Schaftes (3) angeordneten Ringnut (15) angebracht ist,
**dadurch gekennzeichnet, dass** die Nut (15) des Lagers der Ringdichtung (16) so angeordnet und geformt ist, dass sie, während des Versenkens des Wulstes (5) in den Schaft (3), eine Ausdehnungskammer für das Elastomer der Dichtung (16) bildet, und in versenkter Stellung gewährleistet, dass die Dichtung (16) auf dem sich über dem maximalen Durchmesser des Wulstes (5), in senkrechter Richtung zur Achse Y-Y des Schaftes (3) gemessen, befindlichen hinteren Teil des Wulstes (5) aufliegt, wobei die Ringdichtung (16) einem radialen Restdruck unterworfen ist, der die Dichtheit der Verbindung gewährleistet und gleichzeitig verhindert, dass sich die Rohrelemente (2, 4) trennen.

2. Kugelgelenk nach Anspruch 1, **dadurch gekennzeichnet, dass** die Nut (15) des Lagers der Ringdichtung (16) in einer ringförmigen Ausbauchung (9) am Eingang des Schaftes angebracht ist, dessen innerer Durchmesser größer als der maximale Durchmesser des runden Wulstes (5) ist, wobei diese Ausbauchung (9) sich mit dem Lager mit rundem Profil (11) des Schaftes (3) verbindet und durch zwei geneigte Seitenwände (12, 13) definiert ist, die außen zusammenlaufen und durch eine Rundung (14) miteinander verbunden sind.

3. Kugelgelenk nach Anspruch 2, **dadurch gekennzeichnet, dass** die beiden Seitenwände (12, 13) der Ausbauchung (9) einen Winkel α ergeben, der ungefähr zwischen 45° und 70° liegt.

4. Kugelgelenk nach einem der Ansprüche 1 bis 3, **dadurch gekennzeichnet, dass** die Ringdichtung (16) torisch ist.

5. Kugelgelenk nach einem der Ansprüche 1 bis 4, **gekennzeichnet durch** Anschläge, die jeglichem Zusammenfügen der beiden zu verbindenden Rohrelemente mit falscher Neigung entgegenwirken.

## Claims

1. A ball-and-socket joint for the watertight assembly of two pipe components (2, 4), of the type wherein the male end (1) of a first pipe component (2) is provided with a spherical bead (5) intended for pivotable engagement in a complementary spherical housing (11) of the socket (3), extending along an axis Y-Y, of a second pipe component (4), with the interposition of an elastomer ring seal (16) accommodated in an annular groove (15) formed in the inner wall of the socket (3), **characterised in that** the groove (15) accommodating the seal (16) is arranged and shaped in such a manner that it forms an expansion chamber for the elastomer of the seal (16) when the spherical bead (5) is pushed into the socket (3) and, in the engaged position, ensures that the seal (16) rests against the rear portion of the bead (5) located beyond the maximum diameter of the said bead (5) measured in a direction perpendicular to the axis Y-Y of the socket (3), the seal (16) then being subjected to residual radial compression which ensures the watertightness of the assembly and simultaneously prevents the separation of the pipe components (2, 4).

2. A ball-and-socket joint according to claim 1, **characterised in that** the groove (15) accommodating the seal (16) is formed in an annular flare (9) located at the mouth of the socket, the inner diameter of which is greater than the maximum diameter of the spherical bead (5), the said flare (9) adjoining the spherical housing (11) of the socket (3) and being defined by two inclined side walls (12, 13) converging towards the exterior and connected to one another by a rounded portion (14).

3. A ball-and-socket joint according to claim 2, **characterised in that** the two side walls (12, 13) of the flare (9) form an angle α of between approximately 45° and 70°.

4. A ball-and-socket joint according to any one of claims 1 to 3, **characterised in that** the seal (16) is toroidal.

5. A ball-and-socket joint according to any one of claims 1 to 4, **characterised in that** it comprises stop means intended to prevent counter-slope assembly of the two pipe components to be connected.
